**Europäisches Patentamt**

**European Patent Office**

**Office européen des brevets**

(19)

(11) Veröffentlichungsnummer: **0 221 478**
**B1**

(12)
# EUROPÄISCHE PATENTSCHRIFT

(45) Veröffentlichungstag der Patentschrift:
**03.10.90**

(51) Int. Cl.⁵: **A01D 34/70, A01D 34/63**

(21) Anmeldenummer: **86114817.9**

(22) Anmeldetag: **24.10.86**

(54) **Mähvorrichtung.**

(30) Priorität: **05.11.85 DE 3539140**

(43) Veröffentlichungstag der Anmeldung:
**13.05.87 Patentblatt 87/20**

(45) Bekanntmachung des Hinweises auf die Patenterteilung:
**03.10.90 Patentblatt 90/40**

(84) Benannte Vertragsstaaten:
**AT BE CH DE FR GB LI LU NL**

(56) Entgegenhaltungen:
**EP-A- 0 016 440**
**EP-A- 0 131 245**
**GB-A- 1 250 955**
**US-A- 4 487 007**

(73) Patentinhaber: **Maschinen-Mohr Inh.: Hermann Mohr,
Höttinger Strasse, D-8836 Ellingen(DE)**

(72) Erfinder: **Mohr, Hermann, Höttinger Strasse 44,
D-8836 Ellingen(DE)**

(74) Vertreter: **Patentanwälte Czowalla . Matschkur +
Partner,
Dr.-Kurt-Schumacher-Strasse 23 Postfach 9109,
D-8500 Nürnberg 11(DE)**

## Beschreibung

Die Erfindung bezieht sich auf eine Mähvorrichtung nach dem Oberbegriff des Anspruchs 1.

Mähvorrichtungen, wobei das Fahrzeug mit dem Mähcontainer üblicherweise ein Anhänger an ein Zugfahrzeug ist, an welchem vorne das Mähwerk angeordnet ist, haben sich in der Praxis außerordentlich bewährt. Durch die Anordnung des Gebläses unmittelbar unter dem Boden des Containers entstehen die geringstmöglichen Verluste, so daß mit relativ kleinen Gebläsen eine sehr hohe Saug- und Einblasleistung erzielt werden kann. Dabei hat sich gezeigt, daß die Saugstrecke zwischen Gebläse und dem eigentlichen Mähwerk weit weniger kritisch ist als die Strecke zwischen dem Gebläse und der Ausblasstelle im Container. Nach dem Füllen des Containers fährt die Mähvorrichtung an eine Deponiestelle, wobei nach Öffnen der Rückwand der gesamte Inhalt, vorzugsweise auf einem geneigten Boden, nach hinten herausrutscht.

Diese Anordnung hat jedoch Nachteile, wenn eine einfach erreichbare, in der Nähe liegende Deponiestelle für das Mähgut - selbstverständlich muß es sich nicht nur um Mähgut handeln, sondern die Anordnung ist in gleicher Weise auch zum Aufnehmen von aufgesaugtem Laub od.dgl. geeignet - nicht zur Verfügung steht. In diesem Fall muß das Mähgut oder das Laub - der Einfachheit halber wird im folgenden aber immer nur von Mähgut gesprochen - auf einem Lkw aufgeladen und an eine entfernte Stelle transportiert werden. Das direkte Verfahren mit Hilfe der Mähvorrichtung scheitert zum einen daran, daß dabei das vorne angebrachte Mähwerk stören würde, daß häufig die Geschwindigkeiten dieser Mähfahrzeuge relativ klein sind und daß darüber hinaus auch der Containerinhalt kleiner ist als das Fassungsvermögen eines Lkw's, so daß es zweckmäßiger ist, bei weit entfernten Deponiestellen mehrere Containerfüllungen auf einmal auf einem Lkw abzutransportieren.

Um derartige Schwierigkeiten zu vermeiden, ist in der US-Patentschrift 4 487 007 bereits eine Mähvorrichtung der eingangs beschriebenen Art vorgeschlagen worden, bei welcher der gesamte Mähcontainer durch eine Hubvorrichtung in die Höhe gehoben und gekippt werden kann, um seinen Inhalt beispielsweise auf einen Lkw zu entladen.

Diese aus der US-Patentschrift bekannte Konstruktion mit einem heb- und kippbaren Mähcontainer hat jedoch zum einen den Nachteil, daß die Hubvorrichtung, noch dazu infolge von Schrägstreben, außerordentlich aufwendig ist, die bei den großen Gewichten von beispielsweise nassem Gras oder Laub in der Praxis überhaupt nicht funktionieren kann, da sich das Gestänge unweigerlich verbiegen müßte, sofern man es nicht in einer Weise ausgestaltet, daß es dann in der Praxis zu schwer und unhandhabbar würde. Hinzu kommt noch, daß die mit der Hubbewegung gekoppelte Kippbewegung erst am Ende der Hubbewegung richtig einsetzt. Dies bedeutet, daß nicht in einer beliebigen Hubhöhe eine Entleerung des Mähcontainers stattfinden kann, sondern nur nach dem vollständigen Ausfahren, was in der Praxis außerordentlich unpraktisch ist.

Aus der französischen Patentanmeldung 2 187 672 ist schließlich auch noch eine mobile Erntehilfe bekanntgeworden, bei welcher ein oben offener Trog an einem gabelstaplerartigen Hubgerüst heb- und senkbar angeordnet ist. Der Trog ist am Boden kippbar an den Gabelstaplerarmen angelenkt und durch gesonderten Kippmechanismus mit einem oder mehreren Zylindern schwenkbar. Durch den gesonderten Kippmechanismus besteht nicht nur die Gefahr von Verbiegungen, sondern überhaupt die Schwierigkeit, die auftretenden sehr hohen Kräfte abzufangen. Bei Verwendung eines Hydraulikzylinders müssen in dem Hubgerüst bewegliche Hydraulikleitungen mit verlegt werden, um die Ausschwenkzylinder zu betätigen, was sowohl sehr bauaufwendig ist, als auch im Betrieb sehr anfällig. Schließlich kommt noch hinzu, daß bei dieser Art der Entleerung mit einer notwendigen Schwenkung um mindestens 90°, vorzugsweise aber erheblich höhere Schwenkwinkel als 90°, eine Betätigung über die gezeigten Hubzylinder einen extrem großen Hub erforderlich machen würde, der angesichts der aufzufangenden Kräfte gar nicht praktisch realisierbar ist.

Der Erfindung liegt die Aufgabe zugrunde, eine Mähvorrichtung der eingangs genannten Art so auszugestalten, daß bei einfacher betriebssicherer Konstruktion in beliebigen Höhen und auch mit unterschiedlichen Abständen von dem Lkw eine Entleerung des Mähcontainers stattfinden kann.

Zur Lösung dieser Aufgabe sind erfindungsgemäß die im kennzeichnenden Teil des Anspruchs 1 angegebenen Merkmale vorgesehen.

Durch die erfindungsgemäße Ausbildung läßt sich das Verkippen des Mähcontainers, das nicht durch separates Verkippen gegenüber dem Hubgerüst, sondern durch Verkippen des ganzen Hubgerüsts samt Mähcontainer erfolgt, sehr viel einfacher durchführen, da die Anlenkung des Hubgerüsts einfach am Anhänger erfolgt und das Hubgerüst mittels des Teleskopoberlenkers nach rückwärts mitsamt dem Mähcontainer kippbar ist. Dies ergibt die Möglichkeit, den Mähcontainer starr mit der Hubvorrichtung, zumindest aber sehr viel fester, zu verbinden, als wollte man ihn separat gegenüber der Hubvorrichtung kippen, wie es bei der französischen Patentschrift vorgesehen ist. Darüber hinaus erfolgt die Versorgung eines Hydraulikzylinders mit Druckluft oder Öl sehr viel einfacher, als die Versorgung separater Schwenkzylinder am heb- und senkbaren Wagen des Gabelstaplers.

Die erfindungsgemäße sehr einfache Konstruktion ermöglicht schließlich auch das Verkippen und damit Entleeren des Mähcontainers in beliebigen Höhenstellungen, wobei durch das mehr oder weniger starke Verkippen in Verbindung mit der entsprechenden Verfahrung in große Höhen auch die Auswurf- und Ausfallweite sehr stark variiert werden kann, so daß das Mähgut beim Entleeren des Behälters nicht immer an genau der gleichen Position, bezogen auf die Position der Mähvorrichtung, ausgeworfen wird, sondern eine flächigere Verteilung und damit ein besseres Beladen beispielsweise eines Lkw's stattfinden kann.

Eine weitere Schwierigkeit bei Mähvorrichtungen der eingangs beschriebenen Art besteht darin, daß die Betätigung der Rückwandtür über eine Fernbedienung vom Fahrersitz aus häufig Schwierigkeiten mit sich bringt. So besteht dabei häufig die Gefahr, daß bei einem Spiel eines zur Betätigung vorgesehenen Hydraulikzylinders die Tür einige Zentimeter aufklappen kann - insbesondere unter Berücksichtigung des hohen Gewichts der Grasfüllung - so daß dann Mähgut aus dem Spalt herausfällt und nicht nur auf der gemähten Wiese zurückbleibt, sondern häufig auch Fahrwege verunreinigt.

Um dies zu vermeiden, ist erfindungsgemäß vorgesehen, daß die Rückwand über eine Stange, vorzugsweise den Kolben eines Hydraulikzylinders, betätigbar ist, die über eine Toleranzausgleichsfeder mit der Rückwand verbunden ist. Sofern diese Toleranzausgleichsfeder zwischen dem Hydraulikzylinder und der Rückwand eingesetzt wird, muß man eine Toleranzausgleichsdruckfeder verwenden. Setzt man statt dessen die Toleranzausgleichsdruckfeder zwischen dem Hydraulikzylinder und der Rückwand gegenüberliegenden festen Wand des Containers, muß eine Zugfeder verwendet werden.

Durch diese Ausbildung, bei der die Stange die vorzugsweise als Gummibalg ausgebildete Toleranzausgleichsfeder durchsetzt und mit deren, dem Verbindungsende zur Rückwand abgelegenen, Ende verbunden ist, ist erreicht, daß Verschiebungen der Stange und damit durch mangelnden Druck oder Lecks od.dgl. verursachte Verschiebungen des Hydraulikzylinders hervorgerufene Verschiebungen um das Maß der Zusammendrückung der Toleranzausgleichsfeder zu überhaupt keiner Bewegung und Veränderung der Rückwandstellung führen, so daß die Gefahr eines Aufklaffens der Rückwand mit den dabei auftretenden Schwierigkeiten quantitativ verhindert ist.

Durch die bevorzugte Anordnung der Rückwandbetätigungsvorrichtung innerhalb des Containers ergibt sich der Vorteil, daß beim Einsatz des Geräts beim Umfahren von Büschen, Sträuchern od.dgl. kein Verfangen des Containers mehr auftreten kann, wie dies bei den bislang vorbekannten Containern meist der Fall war, bei denen die Rückwandbetätigungsvorrichtung auf der Außenseite der Seitenwände des Containers angeordnet war.

Weitere vorteilhafte Ausgestaltungen einer erfindungsgemäßen Mähvorrichtung sind in den Unteransprüchen beschrieben.

Die Erfindung soll nachstehend an einem Ausführungsbeispiel sowie anhand der Zeichnung näher erläutert werden. Dabei zeigen:

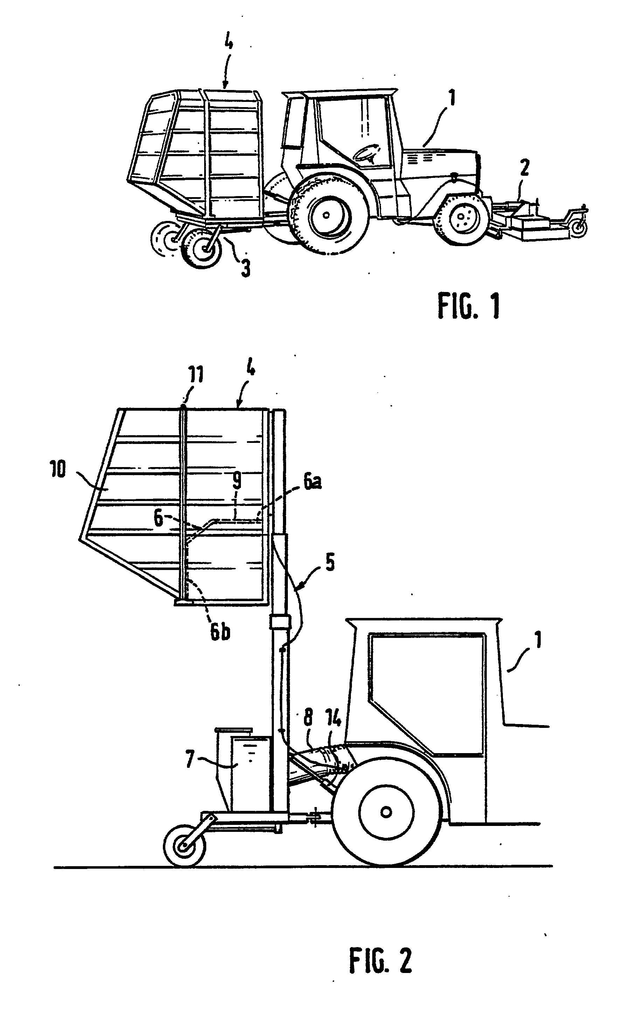

Fig. 1 eine perspektivische Ansicht einer erfindungsgemäßen Mähvorrichtung, bestehend aus einem Traktor mit vorne angebrachtem Mähwerk und einem auf einem Einachsenanhänger angeordneten Mähcontainer, der über eine Saugleitung mit dem Mähwerk verbunden ist;

Fig. 2 eine vergrößerte, im Bereich des hier nicht so interessierenden Zugfahrzeugs schematisierte Seitenansicht der Mähvorrichtung nach Fig. 1 bei angehobenem Mähcontainer;

Fig. 3 eine Seitenansicht der Mähvorrichtung während des Entleerens des Mähcontainers in einen Lkw.;

Fig. 4 einen Längsschnitt durch den Mähcontainer in Öffnungsstellung und

Fig. 5 einen vergrößerten Teilschnitt längs der Linie V - V durch den Anlenkabschnitt des Kolbens des Betätigungshydraulikzylinders für die Rückwand im Bereich einer Toleranzausgleichsdruckfeder.

Im dargestellten Ausführungsbeispiel besteht die Mähvorrichtung aus einem an einen Traktor 1 mit Mähwerk 2 über die genormte Drei-Punkt-Aufhängung des Traktors angehängten einachsigen Anhänger 3, auf dem der Mähcontainer 4 über ein gabelstaplerartiges Hubgerüst 5 nach oben anhebbar angeordnet ist. Unter dem geraden Abschnitt 6a des ansonsten geneigten Bodens 6, 6b ist ein Gebläse 7 angeordnet, welches über einen flexiblen Schlauch 8 mit dem Mähwerk 2 verbunden ist und das dort abgemähte Gras ansaugt und über eine Öffnung 9 im geraden Bodenabschnitt 6a in den Container 4 einbläst. Die im dargestellten Ausführungsbeispiel als Behälterkasten ausgebildete Rückwand 10 des Mähcontainers ist über ein oberes Scharnier 11 schwenkbar mit dem Container verbunden, wobei das Öffnen und Schließen über einen oder zwei seitlich an den Seitenwandabschnitten 12 der Rückwand angreifenden Hydraulikzylinder 13 erfolgt.

Nach dem Füllen des Mähcontainers wird dieser am Hubgerüst 5 hochgefahren, wobei der Aufbau und die Betätigung des Hubzylinders, sei es mechanisch, elektrisch oder vorzugsweise hydraulisch, an dieser Stelle nicht im einzelnen beschrieben zu werden braucht, da hierfür alle gängigen Systeme geeignet sind. Der hochgefahrene Mähcontainer kann damit über die Ladefläche eines Lkw's gebracht werden, so daß beim Öffnen der Rückwandtür der gesamte Inhalt des Mähcontainers - im vorliegenden Fall würde man besser von einem in der Mitte geteilten aufschwenkbaren Mähcontainer als von einem Container mit einer eigentlichen Rückwand sprechen - herausrutscht und rasch, einfach und sauber auf die Ladefläche des LKW abgeladen wird. Damit kann der Mähcontainer infolge der erfindungsgemäßen Vorrichtung außerordentlich einfach und rasch entleert werden, was die Arbeitskapazität einer solchen Mähvorrichtung ganz erheblich steigert.

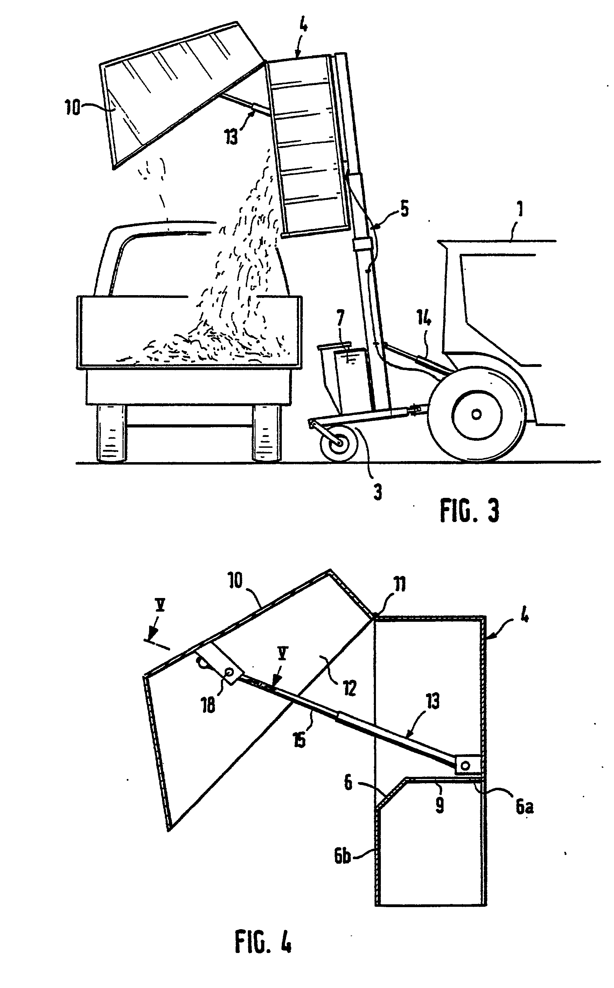

Um auch bei geraden Bodenabschnitten ein sicheres Herausrutschen des Mähcontainerinhalts zu erreichen und gleichzeitig den Mähcontainer einfacher über die Ladefläche des Transportfahrzeugs zu bringen, ist erfindungsgemäß vorgesehen, daß das Hubgerüst nach hinten schwenkbar ist. Dies läßt sich im dargestellten Ausführungsbeispiel eines einachsigen, an der Drei-Punkt-Aufhängung des Zugfahrzeugs 1 angehängten Anhängers sehr einfach dadurch erreichen, daß ein Teleskopoberlenker 14 vorgesehen ist, durch dessen Betätigung ein Verschwenken des gesamten Anhängerfahrzeugs mit dem Hubgerüst gegenüber dem starren unteren Anlenkpunkt erreicht wird (vgl. insbes. Fig. 3).

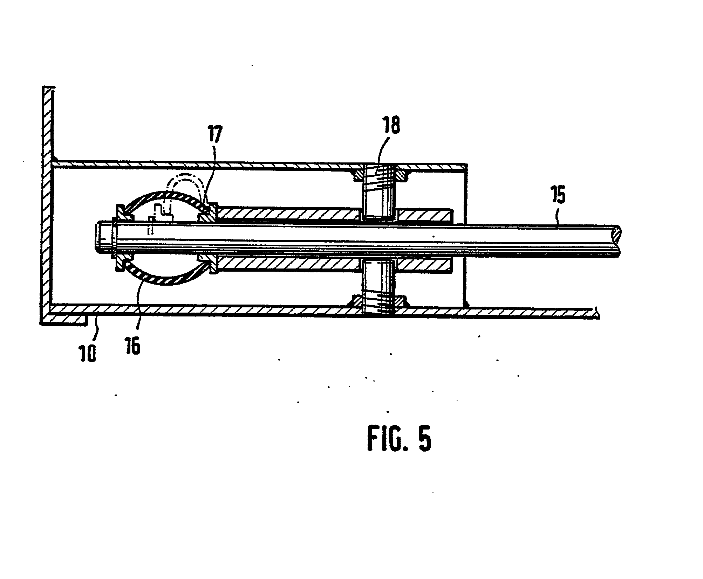

Um eine sichere, auch Toleranzen und evtl. kleine Lecks in dem Hydraulikzylinder 13 der Containerschließvorrichtung auffangende Verriegelung der Rückwand respektive des hinteren Teils des Containers gegenüber dem Mähcontainer zu erzielen, ist eine Anordnung vorgesehen, bei welcher der Kolben 15 des Hydraulikzylinders 13 nicht direkt gelenkig an der Rückwand 10 bzw. der von diesem ausgehenden Seitenwand 12 angelenkt ist, sondern die Verbindung über eine Toleranzausgleichsdruckfeder erfolgt. Diese ist im vorliegenden Fall als Gummibalg 16 ausgebildet, der vom Kolben 15 durchsetzt wird, wobei das Ende des Kolbens mit der der Befestigungsseite 17 am Seitenwandlagerbolzen 18 abgelegenen Seite des Gummibalgs verbunden ist. Beim Schließen der Tür, d.h. beim Einziehen des Kolbens des Hydraulikzylinders 13 wird nach dem vollständigen Schließen noch eine weitere Verschiebung des Kolbens 15 stattfinden können, und zwar - vgl. hierzu insbes. Fig. 5 - um das Maß der Zusammendrückbarkeit des Gummibalgs.

Diese Zusammendrückung des federnd elastischen Gummibalgs hat auf der anderen Seite zur Folge, daß bei einem späteren ungewollten Wiederöffnen der Kolbenstange 15 um das Maß der Zusammendrückung des Gummibalgs 16 überhaupt keine Auswirkung auf den Lagerzapfen 18 und damit überhaupt keine Änderung der Schließstellung der Rückwand erfolgt, so daß das bisher so störende häufige Aufklappen der Rückwand bzw. der rückwärtigen Containerhälfte sicher vermieden wird.

Die Erfindung ist nicht auf das dargestellte Ausführungsbeispiel beschränkt. So wäre es selbstverständlich auch möglich, die Toleranzausgleichsfeder nicht zwischen dem Kolben 15 des Hydraulikzylinders 13 und der Rückwand 10 anzuordnen, sondern statt dessen zwischen dem Hydraulikzylinder 13 und der starren Vorderwand des Containers 4. In diesem Fall müßte dann allerdings eine Zugfeder statt einer Druckfeder vorgesehen sein. Darüber hinaus kommt es selbstverständlich auch nicht darauf an, ob ein oder zwei Schließzylinder verwendet werden und ob diese Zylinder direkt auf die Rückwand wirken oder über ein dazwischengeschaltetes Verschließgestänge.

**Patentansprüche**

1. Mähvorrichtung mit einem auf einem Anhänger (3) angeordneten, eine ggf. kastenartig ausgebildete, nach oben aufschwenkbare, Rückwand (10) aufweisenden Mähcontainer (4), in welchem das Mähgut über ein Gebläse (7) eingeblasen wird, wobei der Mähcontainer an einer Hubvorrichtung (5) am Anhänger (3) über eine Antriebsvorrichtung heb- und zum Entleeren kippbar angeordnet ist, dadurch gekennzeichnet, daß der Anhänger (3) an eine Drei-Punkt-Aufhängung des das Mähwerk tragenden Zugfahrzeugs (1) gekuppelt ist, wobei der Oberlenker der Drei-Punkt-Aufhängung als Teleskopoberlenker (14) ausgebildet ist, und das Gebläse (7) auf dem Anhänger (3) unterhalb des Bodens des Mähcontainers (4) angeordnet ist, daß die Hubvorrichtung (5) ein gabelstaplerartiges Hubgerüst umfaßt und daß das Hubgerüst (5) zu dem Kippen des Mähcontainers (4) mittels dem Teleskopoberlenker (14) nach hinten schwenkbar ist.

2. Mähvorrichtung nach Anspruch 1, dadurch gekennzeichnet, daß der Mähcontainer (4) lösbar an der Hubvorrichtung (5) befestigt ist.

3. Mähvorrichtung nach Anspruch 1 oder 2, dadurch gekennzeichnet, daß der Boden des Mähcontainers (4) nach hinten geneigt ist.

4. Mähvorrichtung nach einem der Ansprüche 1 bis 3, dadurch gekennzeichnet, daß die Rückwand (10) über eine Stange, vorzugsweise den Kolben (15) eines Hydraulikzylinders (13), betätigbar ist, die über eine Toleranzausgleichsfeder mit der Rückwand verbunden ist.

5. Mähvorrichtung nach Anspruch 4, dadurch gekennzeichnet, daß der Kolben (15) die, vorzugsweise als Gummibalg (16) ausgebildete, Toleranzausgleichsdruckfeder durchsetzt und mit deren dem Verbindungsende (17) zur Tür abgelegenen Ende verbunden ist.

6. Mähvorrichtung nach Anspruch 4 oder 5, dadurch gekennzeichnet, daß die Rückwandbetätigungsvorrichtung (13, 16, 17) innerhalb des Containers angeordnet ist.

**Claims**

1. A mowing device having a cuttings container (4) which is mounted on a trailer (3) and comprises a rear wall (10) possibly of box-like construction and pivotable upwards, into which container the cuttings are blown through a blower (7), the cuttings container being mounted on a lifting device (5) on the trailer, for lifting and tilting for emptying via a driving device, characterised in that the trailer (3) is coupled to a three-point suspension of the towing vehicle (1) carrying the mowing attachment, the upper link of the three-point suspension being constructed in the form of a telescopic upper link (14), and the blower (7) being mounted on the trailer (3) below the bottom of the cuttings container (4), that the lifting device (5) comprises a lifting structure like a forklift truck, and that the lifting structure (5) can be pivoted towards the rear by means of the telescopic upper link (14) to tip the cuttings container (4).

2. A mowing device according to Claim 1, characterised in that the cuttings container (4) is detachably secured to the lifting device (5).

3. A mowing device according to Claim 1 or 2, characterised in that the bottom of the cuttings container (4) is inclined towards the rear.

4. A mowing device according to any one of Claims 1 to 3, characterised in that the rear wall (10) can be actuated via a rod, preferably the piston (15) of a hydraulic cylinder (13), which is connected to the rear wall via a tolerance compensating spring.

5. A mowing device according to Claim 4, characterised in that the piston (15) passes through the tolerance compensating compression spring, which is preferably constructed in the form of a rubber bellows (16), and is connected to the end of the latter remote from the end (17) connected to the door.

6. A mowing device according to Claim 4 or 5, characterised in that the rear-wall actuating device (13, 16, 17) is disposed inside the container.

**Revendications**

1. Un dispositif pour faucher comportant un conteneur de produits fauchés (4), présentant une paroi arrière (10) qui peut être pivotée vers le haut, disposé sur une remorque (3), en forme par exemple de caisson, dans lequel les matières fauchées sont soufflées à l'aide d'une soufflante (7), le conteneur de produits fauchés étant disposé sur un dispositif de levage (5) sur la remorque, en pouvant être levé et basculé pour le vidage grâce à un dispositif d'entraînement, caractérisé en ce que la remorque (3) est accouplée à une suspension à trois points du véhicule tracteur (1) portant la barre de coupe, l'articulation supérieure de la suspension a trois points étant constituée comme une articulation supérieure télescopique (14), et la soufflante (7) étant disposée sur la remorque (3) au-dessous du fond du conteneur de produits fauchés (4), en ce que le dispositif de levage (5) comprend un cadre de levage du type chariot à fourche et en ce que le cadre de levage (5) peut être pivoté vers l'arrière afin de basculer le conteneur de produits fauchés (4) au moyen de l'articulation supérieure télescopique (14).

2. Dispositif pour faucher selon la revendication 1, caractérisé en ce que le conteneur de produits fauchés est fixé de façon amovible sur le dispositif de levage (5).

3. Dispositif pour faucher selon la revendication 1 ou 2, caractérisé en ce que le fond du conteneur de produits fauchés (4) est incliné vers l'arrière.

4. Dispositif pour faucher selon l'une des revendications 1 à 3, caractérisé en ce que la paroi arrière (10) peut être actionnée à l'aide d'une tige, de préférence le piston (15) d'un vérin hydraulique (13), qui est reliée à la paroi arrière par un ressort de compensation de tolérance.

5. Dispositif pour faucher selon la revendication 4, caractérisé en ce que le piston (15) traverse le ressort de compensation de tolérance qui est, de préférence, conformé comme un soufflet en caoutchouc (16), et est relié à l'extrémité de celui-ci qui est opposée à l'extrémité de liaison à la porte.

6. Dispositif pour faucher selon la revendication 4 ou 5, caractérisé en ce que le dispositif d'actionnement de la paroi arrière (13, 16, 17) est disposé à l'intérieur du conteneur.

FIG. 1

FIG. 2

FIG. 3

FIG. 4

FIG. 5